# EUROPEAN PATENT APPLICATION

(11) **EP 1 780 709 A1**
(43) Date of publication of application: **02.05.2007**
(21) Application number: 05768738.6
(22) Date of filing: 28.07.2005
(51) Int. Cl.: G11B 20/10

(54) **DISC CONTENT MANAGEMENT METHOD AND DISC**

(30) Priority: 11.08.2004 JP 2004234629
(71) Applicant: IntelligentDisc, Inc., Yokohama-shi, Kanagawa 222-0033 (JP)
(72) Inventor: SHIGETOMI, Takashi, c/o IntelligentDisc, Inc., Kouhoku-ku, Yokohama-shi, Kanagawa (JP); KARIMOTO, Hiroyasu, c/o IntelligentDisc, Inc., Kouhoku-ku, Yokohama-shi, Kanagawa (JP)
(74) Representative: Vossius & Partner
(86) International application number: PCT/JP2005/014272
(87) International publication number: WO 2006/016514

(57) **Abstract**

To provide a disk contents management method and a disk that are capable of preventing complete copying of contents data to be protected to achieve the protection of the copyright of contents data.

Contents data is stored on a disk with a part of the contents data being missing, and the original data corresponding to the missing part is stored on a data memory provided on an electronic circuit mounted on the disk, or a memory on a server side that is connected through a network. When reproducing the disk, the original data corresponding to the missing part, stored on the data memory or server memory, is read out as complementary data. The missing part of the contents data read out from the disk is complemented with the complementary data.

## Description

### FIELD OF THE INVENTION

The present invention relates to a disk contents management method and a disk, and more particularly to a disk contents management method and a disk that can prevent complete illegal copying of contents data to properly protect contents data stored on the disk.

### DESCRIPTION OF THE RELATED ART

With the advent of large capacity storage media such as a compact disk (CD), a digital video disk (DVD), etc., it is becoming standard to store contents data, such as music, a movie, and game software, on these storage media. In CDs and DVDs, music and video are recorded in special formats, so even if simple data copying is performed with a computer, etc., music and video cannot be reproduced from the copied data.

On the other hand, in the case where contents data stored on these storage media has not been subjected to special format processing such as that mentioned above, unless these storage media are provided with particular authentication means, the contents data can be copied without any restriction. This has become a serious problem from the viewpoint of copyright protection.

In addition, even if special format processing is performed on storage media, they are not totally secure from being copied. That is, at present, there are being used many drive units that are capable of writing data to storage media of various kinds such as CD-R (recordable), CD-RW (rewritable), DVD-R, DVD-RW, DVD-RAM (random access memory), etc. In addition, the use of special software makes it possible to illegally copy disk data, such as CD data, DVD data, etc., into a similar storage medium, and it can be reproduced with general-purpose reproducers.

A wide variety of techniques for preventing the illegal disk copying, such as encryption, insertion of copy protect signals or authentication information, error correction, etc., have been proposed. For instance, they are disclosed in Patent Documents 1 through 4.
[Patent Document 1] Japanese Patent Laid-Open Publication No.2002-92894
[Patent Document 2] Japanese Patent Laid-Open Publication No.2004-46859
[Patent Document 3] Japanese Patent Laid-Open Publication No.2003-77218
[Patent Document 4] Japanese Patent Laid-Open Publication No.2004-127448

Besides, there has been proposed a copy preventing system in which subj ect authentication information is stored on a disk; authentication information corresponding to the subject authentication information stored on the disk is stored on an IC card; the subject authentication information of the disk and the authentication information of the IC card are read out when reproducing the disk; and only when they are the same, data is allowed to be reproduced (Patent Document 5).
[Patent Document 5] Japanese Patent Laid-Open Publication No.2003-77218

### DISCLOSURE OF THE INVENTION

### PROBLEMS TO BE SOLVED BY THE INVENTION

However, in the technique for inserting a copy protect signal or authentication signal, special signal processing is required for protection, or authentication activities become necessary. In addition, decoding information becomes necessary to decode a ciphered signal, so the system, becomes complicated. The error correction is not a technique that guarantees reliability and safety.

Furthermore, in the system of storing subject authentication information on a disk and also storing authentication information corresponding to the subject authentication information of the disk on an IC card, the disk and IC card needs to be used as a pair. Therefore, when a plurality of disks and IC cards exist together, it becomes difficult and uncontrollable to specify each pair. In the case where a plurality of disks are managed with one IC card, it becomes difficult to diversify an algorithm for a security program, and on top of that, during the time one disk of a plurality of disks is being reproduced with that IC card, another disk cannot be reproduced at the same time or from a distance.

Accordingly, it is an object of the present invention to provide a disk contents management method and a disk that are capable of preventing complete copying of contents data to be protected to achieve the protection of the copyright of contents data.

### MEANS FOR SOLVING THE PROBLEMS

In order to solve the above problems, a disk contents management method and a disk according to the present invention employs the following featured structures.
(1) A disk contents management method comprising the steps of:
   storing contents data on a disk with a part of the contents data being missing, and storing the original data corresponding to said missing part on a data memory provided on an electronic circuit mounted on said disk;
   reading out said original data corresponding to said missing part stored on said data memory as complementary data when reproducing said disk; and
   complementing the missing part of said contents data read out from said disk with said complementary data.
(2) A disk contents management method comprising the steps of:
   storing contents data on a disk with apart of the contents data being missing, and storing the original data corresponding to said missing part on a memory provided on a server side which is connected through a network;
   obtaining said original data corresponding to said missing part stored on said server memory as complementary data through the network when reproducing said disk; and
   complementing the missing part of said contents data read out from said disk with said complementary data.
(3) The disk contents management method as set forth in claim 1 or 2, wherein
   a code to specify a particular user or store handling said disk is stored on a management memory provided on said electronic circuit;
   when reproducing said disk, the code stored on said management memory is compared with a code previously set at a reproducing side; and
   only when both codes are the same, reproduction of said disk is made possible.
(4) The disk contents management method as set forth in any of claims 1 through 3, wherein
   ID information recorded on the disk is compared with ID information stored on said electronic circuit side; and
   only when both codes are the same, reproduction of said disk is made possible.
(5) The disk contents management method as set forth in any of claims 1 through 4, wherein, at the time of said disk reproduction, said disk reproducing side is connected to the server through the network, and at said server side, said code received from said disk reproducing side is managed.
(6) The disk contents management method as set forth in claim 5, wherein, when said code overlaps, said code stored on the management memory of the electronic circuit of said disk is deleted.
(7) The disk contents management method as set forth in any of claims 1 through 6, wherein noise data is written to said missing part as dummy data.
(8) The disk contents management method as set forth in any of claims 1 through 7, wherein said electronic circuit comprises a radio frequency identification (RF-ID) section.
(9) The disk contents management method as set forth in any of claims 1 through 8, wherein an authentication device is provided on said disk reproducing side so that only a particular user can use it.
(10) The disk contents management method as set forth in any of claims 1 through 9, wherein said authentication device comprises a living body authentication device.
(11) The disk contents management method as set forth in any of claims 1 through 10, wherein said disk comprises an optical disk.
(12) A disk comprising:
   a storage region on which contents data is stored; and
   an electronic circuit with a memory;
   wherein said contents data is stored on said storage region with a part of said contents data being missing;
   and wherein the original data corresponding to said missing part is stored as complementary data on the memory of said electronic circuit.
(13) The disk as set forth in claim 12, wherein a code to specify a particular user or store handling said disk is stored on the memory of said electronic circuit.
(14) The disk as set forth in claim 12 or 13, wherein noise data is written as dummy data to said missing part.
(15) The disk as set forth in any of claims 12 through 14, wherein said electronic circuit comprises a radio frequency identification (RF-ID) section.
(16) The disk as set forth in any of claims 12 through 15, wherein said disk comprises an optical disk.

### ADVANTAGES OF THE INVENTION

According to the present invention, contents data to be protected is divided and stored on a disk and on a data memory provided on an electronic circuit mounted on the disk or a memory on a server side that is connected through a network. For example, only a part of contents data is stored on the data memory of the electronic circuit, and at the time of reproduction, only in the case where predetermined conditions are met, both data are synthesized and the original contents data is made reproducible. Therefore, simple disk copying can obtain only incomplete contents information. This suppresses illegal copying. At a storage position on the disk corresponding to a missing part of the contents data stored on the electronic circuit, data irrelevant to the contents data (e.g., a noise signal) is written. Therefore, even if a disk copied completely from that disk is reproduced as it is, contents data containing noise is reproduced and therefore reproduction of the original contents data is impossible. Examples of the predetermined conditions are as follows. That is, in the disk and the electronic circuit, a management code (codes, symbols, numbers, etc.) is written to a manager (e.g., a store) managing the disk. At the time of reproduction, only if the management codes written to the disk and electronic circuit are the same, the original contents data, read out from the electronic circuit instead of the noise data stored on the disk, is inserted. In this manner, all of the original contents data can be reproduced.

### BRIEF DESCRIPTION OF THE DRAWINGS

FIG. 1 is a block diagram showing a basic system configuration for a disk contents management method according to the present invention;
FIG. 2 is a diagram showing an example of a format for optical data as contents data (speech and video data) in an embodiment of the present invention;
FIG. 3 is a diagram showing a store number code, data for managing a management code written to the management memory of the electronic circuit, data for managing the optical disk ID information and navigation code written to the code memory, noise data recorded on the data track of the optical disk written to the data memory, and other data, in accordance with the above embodiment; and
FIG. 4 is a flowchart showing a processing procedure in the above embodiment.

### DESCRIPTION OF THE NUMEPALS

- 1: a disk drive
- 2: a reader/writer
- 3: an arithmetic unit
- 4: a living body authentication device
- 11: an electronic circuit
- 12: an optical data storage section
- 13: a drive section
- 14: a memory
- 31: a read-only memory(ROM)
- 32: a random access memory(RAM)
- 33: an arithmetic processing section
- 34: a display
- 111: a transmitter-receiver section
- 112: a signal processing section
- 113: a management section
- 114: a code memory
- 115: a data memory
- 116: a management memory

### DESCRIPTION OF THE PREFERRED EMBODIMENTS

The configuration and operation of a preferred embodiment of a disk contents management method and a disk according to the present invention will hereinafter be described in detail with reference to the accompanying drawings.

In the following description, there is used an optical disk with an electronic circuit having a central processing unit (CPU) function, memories, and other devices. However, it is needless to say that the present invention is not limited to such an optical disk, but may be applicable to arbitrary disks and storage media.

FTG. 1 is a block diagram showing a basic system configuration for a disk contents management method according to the present invention. In this system, a disk drive 1 rotates an optical disk to read out contents data from the optical disk or write data to the optical disk. A data storage section provided on one side of the optical disk is used to store optical data such as contents data, etc. The other side of the optical disk is equipped wi th an electronic circuit (CPU) 11 for carrying out predetermined signal processing. The electronic circuit 11 is equipped with a transmitter-receiver section 111, a signal processing section 112, a management section 113, a code memory 114, a data memory 115, and a management memory 116. The processed signals in the electronic circuit 11 and external information, for example, are sent to and received from an external circuit through the radio section (transmitter-receiver section) 111 of the disk drive 1 as radio signals. Note that the code memory 114, data memory 115, and management memory 116 may be formed as one memory.

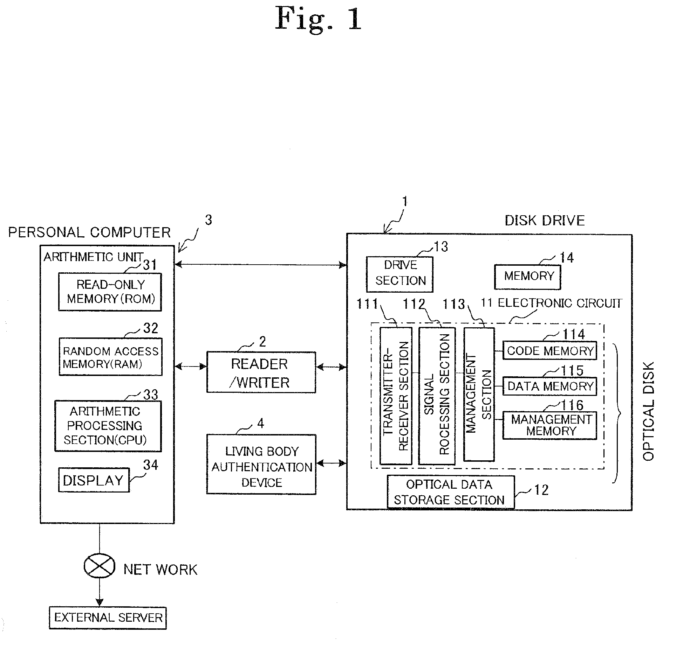

Referring to FIG. 1, the disk drive 1 is provided with an insertion slot (not shown) into which the optical disk is inserted. The optical disk inserted is rotated at a predetermined speed. When an optical disk is being rotated, laser light is irradiated from an optical pickup toward the optical disk surface, and the reflected light is detected through the optical pickup, whereby optically recorded data is read out. Laser light is also irradiated from the optical pickup to write data.

The disk drive 1 is equipped with a drive section 13 for rotating the optical disk and a memory 14. One side of the optical disk is equipped with an optical data storage section 12, which has a ROM region storing music information, video information, program information, and other information, and a RAM region to which arbitrary data can be written. The other side of the optical disk is equipped with the electronic circuit 11 that has a CPU function. The electronic circuit 11, for example, can be formed as a radio frequency identification (RF-ID) section. Of course, the electronic circuit 11 can also be provided on the above-described one side.

The RF-ID section generally makes possible non-contact communication which uses electromagnetic waves. The communication (reading and writing) of the data within a semiconductor memory (IC chip) is made possible in a non-contact state. The RF-ID section normally comprises an IC chip and a coil-shaped antenna connected to the IC chip.

A transmitter-receiver 2 has a reader-writer function, and transmits and receives data to and from the transmitter-receiver section 111, provided in the IC chip of the RF-ID section (electronic circuit 11) disposed on the optical disk surface, by radio communication. The data communication between the transmitter-receiver 2 and the transmitter-receiver section 111 of the electronic circuit 11, for example, is performed at a transmission rate of 106 Kbytes/s (Kbps).

If the electronic circuit 11 (RF-ID section) receives radio waves from the transmitter-receiver 2 through the antenna (transmitter-receiver section 111), a resonance phenomenon causes an electromotive force to occur (electromagnetic induction, etc.), and this electromotive force is rectified by a power-supply rectifying section to use a power source for the electronic circuit 11. With this power source, the IC chip within the RF-ID section is started. It is a matter of course that power supply is not limited to such a configuration.

An arithmetic unit 3 is, for example, a personal computer (PC) and is equipped with a read-only memory (ROM) section (storage section) 31 on which basic information such as an operating system (OS) is stored, a random access memory (RAM) section 32 as a rewritable storage section, an arithmetic processing section 33 such as a CPU, and a display 34 such as a liquid crystal display. The arithmetic unit 3 transmits and receives data to and from the disk drive 1. to perform desired signal processing.

A living body authentication device 4 is used to limit the start and operation of this system to permitted users. Living body parameters, such as fingerprint authentication, face authentication, voiceprint authentication, and iris authentication parameters, are considered. When starting the PC (arithmetic unit) 3, ausertouches, for example, a fingerprint reader for fingerprint authentication with a predetermined finger so that the fingerprint is optically read, and then the read fingerprint is compared with a previously registered user' s fingerprint. Next, only when the two fingerprints match with each other, the user is permitted to use.

In the system constructed as described above, in this embodiment, contents data, which is to be protected, such as music, video, etc., is stored on the optical data storage section 12 of the optical disk. At this time, a part of the contents data is not written to the optical data storage section 12. Instead of the data (missing part) not written, dummy data (e.g., noise data) basically irrelevant to data corresponding to the missing part is written (or embedded) . On the other hand, the original contents data (complementary data) corresponding to the missing data is stored on the data memory 115 of the electronic circuit 11. The complementary data, which is the original contents data corresponding to the missing data, can be written at the time of the shipment to a ROM type memory as the data memory 115, or can be written afterward to a RAM type memory. The writing of the complementary data to the RAM type memory can also be performed by downloading the data via a network. In this case, the complementary data itself can be varied according to the manner in which it is used. For instance, special characters can be added for a limited period of time during which contents data can be used.

The management memory 116 is used to store the management information of the optical disk. In this embodiment, the management memory 116 stores a unique store number code for specifying a store as a manager managing the disk (e.g., an optical-disk store or optical-disk rental store). Using this store number code, the PC is connected with a server on a network, downloads complementary data, and performs contents management to be described later.

The store number code contains, for example, the store' s name, person's name in charge, ID code for each user, and so forth. Therefore, if a server connected through a network refers to a store number code created by a PC, that server can obtain the management information of the disk, so traceability is obtained.

The store number code can be set so that only one exists in the world, so when a user and a person in a store, having the same store number code, have duplicate access, it is found that there is a possibility of illegal access. For example, at the time of selling, a plurality of parameters, such as the store's name, department name, person's name in charge, and time code, may be written together with the store number code. When there is duplicate access using the same store number code, the store number code stored on the management memory 116 of the electronic circuit 11 of the optical disk is deleted to prevent illegal access. If the store number code is deleted, the optical disk cannot be reproduced. Therefore, a purchaser of the legal optical disk needs to carry it to the selling store to change the store number code so that the disk can be reproduced. In this case, that person is given a premium or the like as compensation when changing the store number code.

In the case where duplicate access is performed with the same store number code, there is a great possibility that a purchaser of the legal optical disk will be directly or indirectly concerned in the illegal copying, and by tracing at least the store number code, a person or organization involved in illegal copying can be found.

Now, contents data has been stored on the optical data storage section 12 of the optical disk; dummy data such as noise data has been written as the missing part of the contents data; and the complementary data for the missing part has stored on the data memory 115 of the electronic circuit 11.

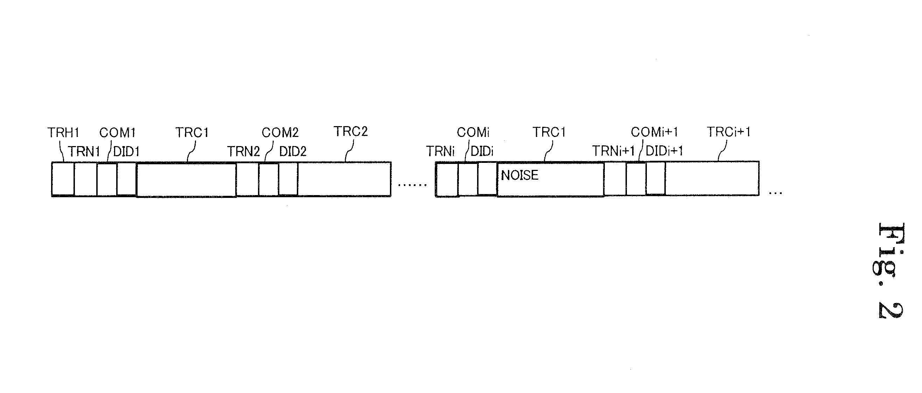

FIG. 2 shows an example of a format for optical data as contents data (speech and video data). In the figure, the TRH field is a head track and indicates the entire information of the optical disk. The TRNi field, is a navigation track and indicates a video chapter number and index data in order of video output. The COMi field is a command code and indicates the data required to read data from a contents track. The DIDi field indicates ID information and subject authentication information, and the TRCi field indicates a contents track, video data, and speech data. In this format, "i" represents a natural number. In this example, the contents track TRCi is provided with a missing part to which dummy data such as noise data is written.

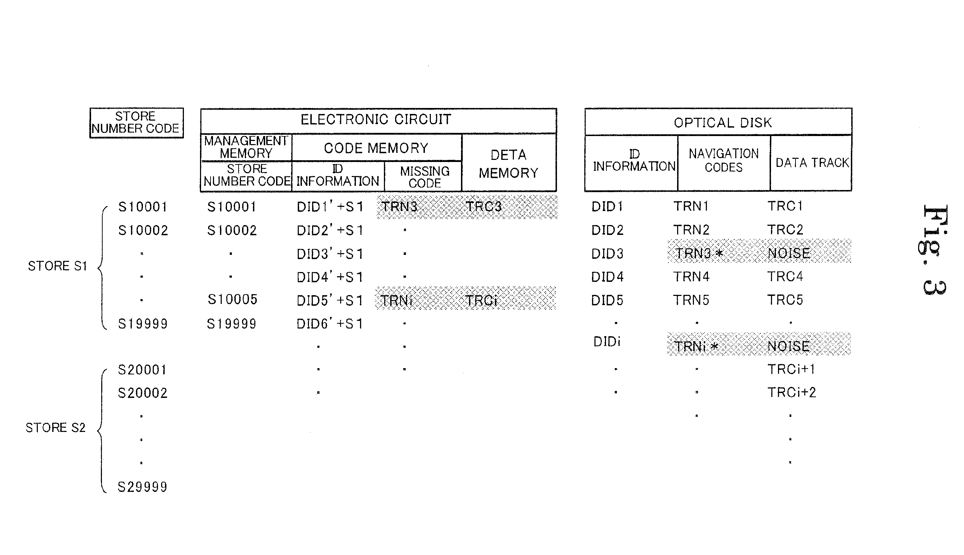

FIG. 3 shows a store number code, data for managing the management code written to the management memory 116 of the electronic circuit, data for managing the optical disk ID information and navigation code written to the code memory, noise data recorded on the data track of the optical disk written to the data memory, and other data.

In FIG. 3, as store number codes, store S1 is given codes S10001, S10002, ···, and S1999, and store S2 is given codes S20001, S20002, ···, and S29999.

The navigation codes corresponding to the ID information DIDI, DID2, DID4, and DID5 stored on the optical disk have TRN1, TRN2, TRN4, and TRN5, and the corresponding data tracks have TRC1, TRC2, TRC4, and TRC5. The navigation track corresponding to the ID information DID3 has TRN3, and the corresponding data track has noise data NOISE. Likewise, the navigation track corresponding to the ID information DIDi has TRNi, and the corresponding data track has noise data NOISE.

On the other hand, on the management memory 116, code memory 114, and data memory 115 of the electronic circuit, data corresponding to the store number codes S10001 to S19999 are stored as shown. FIG. 3 shows ID information DID1'+S1 corresponding to store number code S10001 stored on the management memory 116; missing code TRN3; complementary data TRC3 stored on the data memory 115; ID information DID2'+S1, DID3'+S1, and DID4'+S1 corresponding to store number code S10002; ID information D1D5'+S1 corresponding to store number code S10005; missing code TRNi; complementary data TRCi written to the data memory; and ID information DID6'+S1 corresponding to store number code S19999.

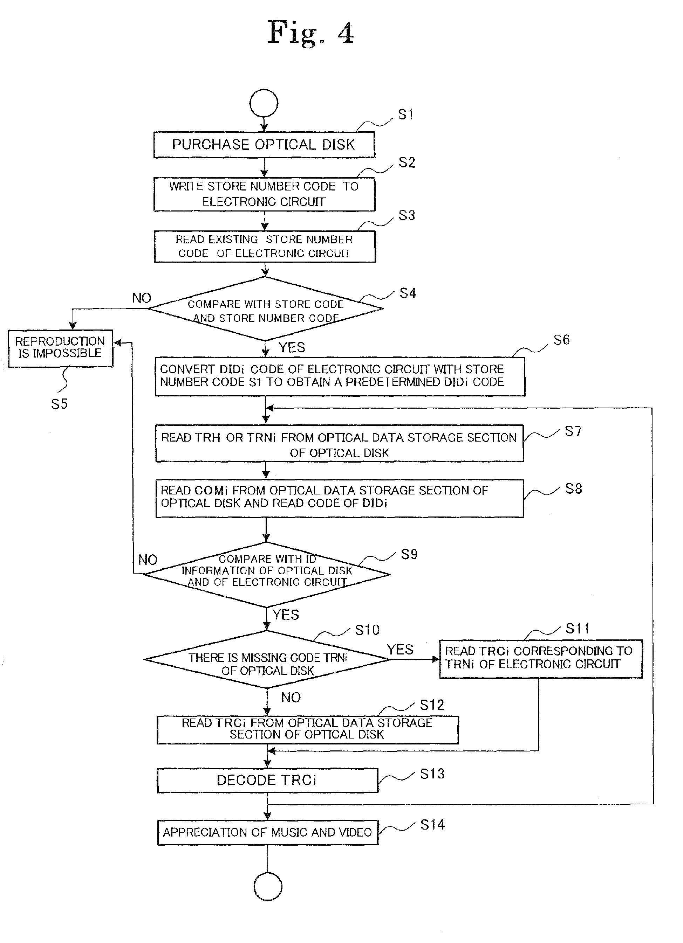

FIG. 4 shows a flowchart showing a processing procedure in this embodiment.

First, if a user purchases an optical disk at a store (step S1), the store number code is written to the management memory 116 of the electronic circuit 11 through RFID from the PC 3 and transmitter-receiver 2 of the store (step S2). In this state, the optical disk can be used.

Now, if the user inserts the optical disk into the disk drive, the existing store number code is read from the management memory 116 of the electronic circuit 11 (step S3). Next, the store code for the store in which the PC 3 is installed is compared with the store number code (step S4), and if both are not the same, reproduction of the optical disk is made impossible as an illegal disk (step S5).

In step S4, if both are decided to be the same, the DIDi code (ID information and subject authentication information) of the electronic circuit 11 is complemented with the store number code to obtain a predetermined DIDi code (step S6) . The entire optical disk information from the head track TRH, or the video chapter number and the index data in order of video output from the navigation track TRNi, are read from the optical data storage section 12 of the optical disk (step S7) . Further, the command code COMi is read from the optical data storage section 12 of the optical disk to read the data required to read data, and the DI information and subject authentication information is read from DIDi (step S8). Subsequently, the ID information of the optical disk is compared with the ID information of the electronic circuit (step S9) . If both are not the same, reproduction of the optical disk is made impossible (step S5) . If both are the same, it is decided whether there is a missing code in the navigation track TRNi (step S10).

In step S10, if it is decided that there is a missing code, the contents track TRCi corresponding to the navigation track TRNi of the electronic circuit 11 is read (step S11). If it is decided that there is no missing code, the contents track TRCi is read from the optical data storage section 12 of the optical disk (step S12). The read contents track TRCi is decoded (step S13) , whereby appreciation of music and video by the user becomes possible (step S14). If appreciation of music and video by the user is completed, the optical disk is taken out from the disk drive. When appreciating music and video again, the above step S3 and subsequent steps are carried out.

By way of a complement to the foregoing description, one disk is assumed to be sold at a store S1 at the time of the shipment, and it is recorded as S1 on the management memory of the electronic circuit. When this disk is sold at the store S1, data S10001 (store number code and arbitrary code) is stored at another location on the management memory by a clerk or with a date time code which is only one. If this disk is inserted into the disk drive, the S1 of S10001 sold at the store is compared with the S1 at the time of the shipment. Because both are the same, the subsequent steps are executed, whereby the user can appreciate a movie.

However, if the same disk is sold at a store S2, S20100 (store number code S2) and an arbitrary code (clerk' s name or date time), for example, are written to the management code of the electronic circuit through RFID. Because it is not the same as S1 stored in the electronic circuit, the subsequent steps are not performed. This purpose is to limit the selling of optical disks to reliable stores, because there are cases where, even if optical disks are desired to be sold at reliable stores after the shipment, they are sold through illegal channels and results in a reduction in price. In addition, when the maker can directly detect the management code of an optical disk sold through a network, the maker can confirm that the optical disk has not been sold at a store expected from the first. This makes it possible to trace an illegal marketing route.

For a disk that is only one in the world, a store code S1 and a clerk or date time are finely coded (S1 and 0001). This makes it possible to obtain a disk which is only one in the world. This is because the same clerk cannot sell two disks at the same time. When this disk is completely copied including the optical disk part and the electronic circuit part, if a user tries to obtain an additional character, the server on the maker side is accessed many times through the disk whose code is only one in the world and therefore it is found that the disk has been copied. At a result, access is cut off at the server side so that this code number is not accessed. However, when a person who bought the disk legally goes to the store and demands to change the code, a new code is recorded on the management code of the electronic circuit through RFID after hearing circumstances from that person. For instance, the person is given S10980 (store number code, clerk's name (e.g., the code of a person in charge of management in this embodiment), and date time) and a premium.

The configurations and operations of the preferred embodiments of a disk contents management method and a disk according to the present invention have been described in detail. However, such embodiments are mere examples of the present invention, and are not to limit the present invention. It would be obvious to those skilled in this art that within the scope of the present invention, many modifications and variations are possible according to specified uses.

## Claims

1. A disk contents management method comprising the steps of:
storing contents data on a disk with apart of the contents data being missing, and storing the original data corresponding to said missing part on a data memory provided on an electronic circuit mounted on said disk;
reading out said original data corresponding to said missing part stored on said data memory as complementary data when reproducing said disk; and
complementing the missing part of said contents data read out from said disk with said complementary data.

2. A disk contents management method comprising the steps of:
storing contents data on a disk with a part of the contents data being missing, and storing the original data corresponding to said missing part on a memory provided on a server side which is connected through a network;
obtaining said original data corresponding to said missing part stored on said server memory as complementary data through the network when reproducing said disk; and
complementing the missing part of said contents data read out from said disk with said complementary data.

3. The disk contents management method as set forth in claim 1 or 2, wherein
a code to specify a particular user or store handling said disk is stored on a management memory provided on said electronic circuit;
when reproducing said disk, the code stored on said management memory is compared with a code previously set at a reproducing side; and
only when both codes are the same, reproduction of said disk is made possible.

4. The disk contents management method as set forth in any of claims 1 through 3, wherein
ID information recorded on the disk is compared with ID information stored on said electronic circuit side; and
only when both codes are the same, reproduction of said disk is made possible.

5. The disk contents management method as set forth in any of claims 1 through 4, wherein, at the time of said disk reproduction, said disk reproducing side is connected to the server through the network, and at said server side, said code received from said disk reproducing side is managed.

6. The disk contents management method as set forth in claim 5, wherein, when said code overlaps, said code stored on the management memory of the electronic circuit of said disk is deleted.

7. The disk contents management method as set forth in any of claims 1 through 6, wherein noise data is written to said missing part as dummy data.

8. The disk contents management method as set forth in any of claims 1 through 7, wherein said electronic circuit comprises a radio frequency identification (RF-ID) section.

9. The disk contents management method as set forth in any of claims 1 through 8, wherein an authentication device is provided on said disk reproducing side so that only a particular user can use it.

10. The disk contents management method as set forth in any of claims 1 through 9, wherein said authentication device comprises a living body authentication device.

11. The disk contents management method as set forth in any of claims 1 through 10, wherein said disk comprises an optical disk.

12. A disk comprising:
a storage region on which contents data is stored; and
an electronic circuit with a memory;
wherein said contents data is stored on said storage region with a part of said contents data being missing;
and wherein the original data corresponding to said missing part is stored as complementary data on the memory of said electronic circuit.

13. The disk as set forth in claim 12, wherein a code to specify a particular user or store handling said disk is stored on the memory of said electronic circuit.

14. The disk as set forth in claim 12 or 13, wherein noise data is written as dummy data to said missing part.

15. The disk as set forth in any of claims 12 through 14, wherein said electronic circuit comprises a radio frequency identification (RF-ID) section.

16. The disk as set forth in any of claims 12 through 15, wherein said disk comprises an optical disk.
